# EUROPÄISCHE PATENTANMELDUNG

(11) **EP 2 362 156 A2**
(43) Veröffentlichungstag der Anmeldung: **31.08.2011**
(21) Anmeldenummer: 11154305.4
(22) Anmeldetag: 14.02.2011
(51) Int. Cl.: F24J 2/04, F24J 2/51

(54) **Wärmedämmverbundsystem**

(30) Priorität: 18.02.2010 DE 102010008520
(71) Anmelder: KÖSTER BAUCHEMIE AG, 26607 Aurich (DE)
(72) Erfinder: Venzmer, Helmuth, Prof. Dr. Dr., 23966 Karow (DE); Von Werder, Julia, Dipl.-Ing., 23966 Wismar (DE); Kogan, Daniel, Dipl.-Ing., 23966 Wismar (DE); Malorny, Winfried, Prof. Dr. Dr., 17033 Neubrandenburg (DE); Sack, Michael, Dipl.-Ing., 17121 Loitz (DE); Born, Andrea, BBA, 65267 Elbtal (DE)
(74) Vertreter: Scholz, Volker

(57) **Zusammenfassung**

Die vorliegende Erfindung betrifft ein Wärmedämmverbundsystem (1) mit einer Wärmedämmschicht (2), auf der eine Deckschicht (3) aufgebracht ist, wobei in und/oder unterhalb der Deckschicht (3) eine Wärmeträgerflüssigkeit enthaltende Kapillarrohrmatte (5) vorgesehen ist, die Kapillarrohrmatte (5) zumindest ein Verteiler- und ein Sammelrohr (6) aufweist, die die einzelnen Kapillaren mit einem Wärmetauscher verbinden, und wobei die Wärmeträgerflüssigkeit innerhalb der Kapillarrohrmatte (5) zirkulierbar ist und mit dem Wärmetauscher in Wirkverbindung steht.

## Beschreibung

Die vorliegende Erfindung betrifft ein Wärmedämmverbundsystem sowie ein Gebäude mit einem solchen Wärmedämmverbundsystem sowie dessen Verwendung.

Weltweit steigende Energiepreise in Verbindung mit der Verknappung fossiler Energieträger sowie das dringende Gebot einer drastischen CO₂-Emissionsminderung zur Abwendung einer weltweiten Klirnakatastrophe machen deutlich, dass die Hinwendung zu einer Energiewirtschaft, die neben der Energieeinsparung primär auf den Einsatz regenerativer Energien setzt, unumgänglich ist.

In Deutschland beläuft sich der Energieeinsatz zum Heizen und Kühlen von Gebäuden auf etwa 40 % des Gesamtenergieverbrauchs. Angesichts dieses erheblichen Anteils kommt Effizienzsteigerungen ein besonderer Stellenwert zu, die sich im Immobilienbereich primär durch den Einsatz moderner Heizanlagentechnik, die Verbesserung der energetischen Qualität der Gebäudehülle und die Deckung des Energiebedarfs zur Gebäudebeheizung und Warmwasserbereitung durch einen möglichst hohen Anteil an regenerativer Energie realisieren lassen. Mit Inkrafttreten der Energiesparverordnung EnEV 2009 und des Erneuerbare-Energien-Wärrnegesetzes im Januar 2009 müssen Wohn- und Nichtwohngebäude nicht allein in einer energiesparenden Bauweise errichtet werden, sondern sollen darüber hinaus zumindest anteilig erneuerbare Energien nutzen. Als zentrale Technologiefelder für weitere Effizienzsteigerungen werden unter anderem Multifunktionsfassaden und die Nutzung von Systemen mit Niedrigenergie (Umweltwärme) betrachtet.

Eine technisch ausgereifte, kasteneffiziente und daher weit verbreitete Maßnahme zur Erzielung eines hohen Wärmedämmstandards von Gebäudeaußenwänden - quantitativ ausgedrückt durch einen niedrigen U-Wert - besteht in der Applikation von Wärmedämmverbundsystemen (WDVS) auf der Fassadenaußenseite. Dies gilt unabhängig von Größe und Gebäudetyp insbesondere für die energetische Sanierung des Bestands, aber auch für den Neubau. Der übliche Aufbau von Wärmedämmverbundsystemen umfasst eine Wärmedämmschicht, die vorzugsweise auf der Außenseite eines Baustoffs, bevorzugt Mauerwerk oder Beton, eines Gebäudes aufgebracht ist, und eine auf die Wärmedämmschicht aufgetragene Deckschicht, beispielsweise eine Putzschicht. Diese Deckschicht dient insbesondere als Witterungsschutz.

Ein Nachteil bei Einsatz herkömmlicher Wärmedämmverbundsysteme liegt in dem Bauschadenproblem der mikrobiellen Besiedelung der Wärmedämmverbundsysteme, welches bislang nicht umfassend gelöst ist. Die Zugabe von Bioziden in die Putzsysteme bietet aufgrund der Wasserlöslichkeit der Wirkstoffe einen temporären Schutz. Die Wirkstoffe müssen wasserlöslich sein, um von den Mikroorganismen aufgenommen werden zu können. Dies zieht eine Auswaschbarkeit nach sich und somit über die Standdauer der Fassade eine erhebliche Belastung der Umwelt.

Ursächlich für die zunehmende mikrobielle Besiedlung der Fassaden ist eine erhöhte Wasserbelastung in Folge von Schlagregen und Kondensation. Durch steigende Dämmschichtdicken und die nachfolgende thermische Entkopplung der dünnen Putzschicht können Feuchtefilme nur langsam abtrocknen und verweilen oft mehrere Stunden an der Fassadenoberfläche.

Die Nutzung von Umweltwärme beruht vor allem auf der passiven Solarenergienutzung durch Realisierung entsprechend groß dimensionierter Fensterflächen bzw. verglaster Wintergärten in den Südfassaden. Eine Ausweitung dieses Prinzips auf opake Wandflächen besteht in der Installation transparenter Wärmedämmung, die sich am Markt bisher jedoch nicht etablieren konnte.

Von aktiver Solarnutzung wird gesprochen, wenn neben dem Gebäude zusätzliche Anlagen erforderlich sind, die für ihren Betrieb auf motorisch bewegte Pumpen und Ventile sowie auf elektronische Steuerungen angewiesen sind. Hier dominieren im Gebäudesektor derzeit auf Dachflächen aufgeständerte Solarkollektoranlagen zur Warmwasserbereitung und Heizimgsunterstützung. Daneben kommen beim Neubau aktuell vermehrt elektrisch betriebene Wärmepumpenanlagen zum Einsatz, die je nach Effizienz bis zu 75 Prozent kostenlose Umweltwärme nutzen. Die für den Kreisprozess notwendige Wärme kann dabei durch Kollektor- oder Absorbersysteme alternativ dem Erdreich, dem Grundwasser oder der Luft entzogen werden. Massivabsorber sind Betonelemente, die innen mit Zirkulationsrohren durchzogen sind und mit der Umgebungsluft, dem Erdreich oder dem Grundwasser im Wärmehaushalt stehen. Der Transport der im Beton eingespeicherten Umweltwärme erfolgt über eine im Rohrleitungssystem zirkulierende Wärmeträgerflüssigkeit, die mittels einer Umwälzpumpe im direkten Wärmeaustausch mit dem Verdampfer einer Wärmepumpe steht. Das heißt, wenn die Wärmepumpe in Betrieb ist, wird die Wärmeträgerflüssigkeit stark abgekühlt. Durch den Wärmeentzug der Wärmepumpe wird der Wärmetauscher unter die Umgebungstemperatur abgekühlt und kann aus der vorbeiströmenden Luft, den auftreffenden Niederschlägen sowie aus der diffusen und direkten Sonnenstrahlung Umweltenergie aufnehmen. Als oberirdische Betonbauteile eignen sich Mauern, Balkonbrüstungen, Garagen, Flachdächer sowie Vorhangfassadenplatten und Sandwichelemente im Industrie- und Wohnungsbau. Bei einer Vorhangfassade handelt es sich um einzelne Platten, jedoch nicht um ein Verbundsystem. Bei einer solchen Vorhangfassade wird zusätzlich eine Dämmung an die Wand gebracht und zwischen Wand und Dämmung eine Luftschicht belassen. Die einzelnen Platten werden dann auf eine vorher hergestellte Unterkonstruktion aufgeschraubt.

Auch ist es bekannt, durch Integration von Solarmodulen in Betonfertigteilen Solarthermie und Photovoltaik (PV) gekoppelt und Synergieeffekte zu nutzen. Dank der massiven Bauweise und dem Entzug der Abwärme durch den Massivabsorber ergibt sich eine relativ konstante und niedrige Betriebstemperatur, was den Wirkungsgrad der PV-Module erheblich steigert. Zusätzlich wird der Wärmeertrag aus der Solarthermie über einen Pufferspeicher und eine Wärmepumpe in den Kreislauf für die Gebäudeklimatisierung eingebracht.

Opake Fassadenoberflächen können nicht nur für die passive (transparente Wärmedämmung), sondern auch für die aktive Energiegewinnung genutzt werden. Messergebnisse für opake bzw. transparente Wärmedämmung bestätigen, dass die Integration von Sole- bzw. Luftkollektoren in Fassaden die thermischen Verluste beider Bauteile verringern. Der geringeren jährlichen Einstrahlungssumme derartiger Systeme im Vergleich zu geneigten Kollektoren steht ein gleichmäßiges jahreszeitliches Ertragsprofil gegenüber, das die Auslegung auf hohe solare Deckungsanteile ohne sommerliche Stillstandszeiten erlaubt. Durch die Integration einer füssigkeitsgekühlten Absorberschicht zwischen transparenter Wärmedämmung (TWD) und Wand lässt sich das passive zu einem aktiven System erweitern (hybride TWD). Die Nutzung der mit Fluid abgeführten Wärme stellt in den Sommermonaten einen effektiven Überhitzungsschutz dar.

Die Integration der Module in die Fassade ist auf Grund der hygrothermischen Wechselwirkungen komplex und hat vielfach zu Leistungseinbußen (Kondensatbildung an der Innenseite der Glasabdeckung von Fassadenkollektoren) und Bauschäden geführt.

Diese Probleme, hohe Kosten sowie die sich aus den dunklen Absorberflächen ergebenden optischen Beeinträchtigungen sind vermutlich ursächlich für die nach wie vor geringe Akzeptanz und Verbreitung dieser Systeme. Sieht man vom Spezialfall der gelegentlich anzutreffenden Integration photovoltaischer Anlagen in Vorhangfassaden ab, so werden derzeit die opaken Außenwandflächen von Gebäuden zur aktiven Gewinnung von Umweltenergie praktisch nicht genutzt.

Der vorliegenden Erfindung liegt die Aufgabe zugrunde, ein Wärmedämmverbundsystem bereitzustellen, das die Nachteile aus dem Stand der Technik überwindet, insbesondere einen Aufbau zur aktiven Energiegewinnung an Wärmedämmverbundsystem-Fassaden ermöglicht, praktisch nicht äußerlich von einem klassischen Wärmedämmverbundsystem ohne aktive Energiegewinnung zu unterscheiden ist, vergleichsweise einfach und kostengünstig umgesetzt werden kann sowie vorzugsweise Schäden durch hygrothermische Wechselwirkungen zumindest minimiert.

Eine weitere Aufgabe der Erfindung liegt darin, ein Wärmedämmverbundsystem bereitzustellen, mit dem die mikrobielle Besiedlung insbesondere der Oberfläche desselben vermieden werden kann, die Verweildauer von Feuchtefilmen verkürzt werden kann und eine zu diesem Zweck erforderliche Energie nicht der Energiebilanz des Gebäudes entnommen werden muss, sondern zusätzlich regenerativ erzeugt werden kann.

Diese Aufgaben werden gelöst durch ein Wärmedämmverbundsystem mit einer Wärmedämmschicht, auf der eine Deckschicht aufgebracht ist, wobei in und/oder unterhalb der Deckschicht eine Wärmeträgerflüssigkeit enthaltende Kapillarrohrmatte vorgesehen ist, die Kapillarrohrmatte zumindest ein Verteiler- und ein Sammelrohr aufweist, die die einzelnen Kapillaren mit dem Wärmetauscher verbinden, und wobei die Wärmeträgerflüssigkeit innerhalb der Kapillarrohrmatte zirkulierbar ist und mit einem Wärmetauscher in Wirkverbindung steht.

Für die Wärmedämmschicht kann ein auf dem Fachgebiet bekanntes Material, beispielsweise EPS- oder Faserdämmplatten, verwendet werden, die nach Anforderung etwa 10 bis 20 cm dick sind.

Als Kapillarrohrmatte soll im Rahmen der vorliegenden Erfindung ein Kapillarrohrsystem verstanden werden, wie es beispielsweise zur Temperierung im Bereich von Gebäuden, beispielsweise zum Einbau in die Decke oder den Fußboden, bekannt ist, um Innenbereiche zu heizen oder zu kühlen. Eine solche Kapillarrohrmatte umfasst eine Vielzahl von einzelnen Kapillaren, die beispielsweise in einer netz- oder gitterartigen Art und Weise miteinander verbunden sein können, unter Zuhilfenahme zumindest eines Verteiler- und eines Sammelrohres. Da die Temperierung mit Kapillarrohrsystemen über große Flächen erfolgt, ist im Vergleich zu anderen Varianten eine sehr geringe Temperaturspreizung zwischen Vor- und Rücklauftemperatur notwendig. Die geringe Temperaturspreizung ist für die bedarfsgerechte Temperierung von Außenwandflächen zur Vermeidung von Kondensatbildung ein entscheidender Vorteil, da die Unterschiede zwischen Tag- und Nachttemperatur in Abhängigkeit der Jahreszeit sehr gering sind und somit nur moderate Temperaturen in der Wärmeträgerflüssigkeit erreicht werden.

Die Energiegewinnung folgt durch das Erwärmen der in den Kapillaren zirkulierenden Wärmeträgerflüssigkeit in den Zeiten, wenn die Oberflächentemperatur über der Taupunkttemperatur liegt.

Die Kapillarrohre sind aufgrund der Strömungstechnik immer deutlich kleiner als die Sammelrohre bzw. Verteilerrohre. Das Verhältnis der Dicke von Kapillare zu Sammelrohr kann beispielsweise in einem Bereich von 1:5 liegen. Je nach Größe der Wandfläche, die mit einem erfindungsgemäßen Wärmedämmverbundsystem versehen werden soll, kann das Wämiedämmverbundsystem auch mehrere miteinander verbundene Kapillarrohrmatten umfassen. Ein Kapillarrohrsystem besteht im allgemeinen aus mehreren miteinander verbundenen Kapillarrohrmatten, die in Abmessungen von etwa 1 m Breite und mehreren Metern Länge produziert werden. Jede dieser Kapillarrohrmatten kann zwei in einem großen Abstand zueinander parallel oder gering beabstandet nebeneinander parallel angeordnete Sammelrohre mit im wesentlichen gleicher Länge umfassen, zwischen denen die im Durchmesser kleineren, meist parallel angeordneten, flexiblen Kapillarrohre verlaufen. Während Sammelrohre einen Durchmesser von 10-30 mm aufweisen können, ist der bevorzugte Durchmesser der Kapillarrohre im Bereich von 2 bis 6 mm. Bei Betrieb fließt die Wärmeträgerflüssigkeit bevorzugt von einem Verteilerrohr (Vorlauf) durch die Kapillarrohre zum Sammelrohr (Rücklauf).

Wesentlich für das erfindungsgemäße Wärmedämmverbundsystem ist, dass die Kapillarrohrmatte in und/oder unterhalb der Deckschicht angeordnet ist, so dass die Außenoberfläche der Deckschicht im wesentlichen nicht von einem üblichen Wärmedämmverbundsystem zu unterscheiden ist.

Dabei ist bevorzugt, dass die Kapillarrohrmatte unmittelbar unterhalb der Deckschichtoberfläche angeordnet ist.

Es ist bevorzugt, zwischen den einzelnen Kapillaren der Kapillarrohrmatte eine Ausgleichsmasse, bevorzugt eine pastöse Ausgleichsmasse, aufzubringen, um die Kapillarrohrmatte in-und/oder unterhalb der Deckschicht, d.h. zwischen Deckschicht und Wärmedämmschicht einzubetten. Auch kann bevorzugt vorgesehen sein, dass Verteiler- und Sammelrohre und/oder Stammrohr(e), die einen größeren Durchmesser als die Kapillaren aufweisen, in Ausnehmungen der Wärmedämmschicht eingebettet sind, die nach Einlegung der Rohre verfüllt werden.

Mit anderen Worten kann die Kapillarrohrmatte direkt auf der Wärmedämmschicht aufgebracht werden, wobei das Material der Deckschicht dann für eine Verfüllung und einen Ausgleich der Zwischenräume zwischen den Kapillaren und den Verteiler- und Sammelrohren dienen kann. Alternativ oder gleichzeitig kann vorgesehen sein, dass die Verteiler- und Sammelrohre und/oder Stamxnrohr(e) zumindest teilweise in Ausnehmungen der Wärmedämmschicht eingelegt sind. Eine Verfüllung bzw. Ausgleich kann dann ebenfalls über Material der Deckschicht oder, bevorzugt, durch Aufbringung von anderer geeigneter Ausgleichsmasse und/oder eine Verschäumung erfolgen. Anschließend kann eine Deckschicht aufgetragen werden.

Erfindungsgemäß ist auch eine Ausführungsform, bei der zwischen Deckschicht und Wärmedämmschicht zumindest eine Armierungssehicht vorgesehen ist.

Bevorzugt ist vorgesehen, dass das Wärmedämmverbundsystem über die Wärmedämmschicht zumindest teilweise auf einer Außenseite eines Wandbaustoffs, bevorzugt Mauerwerk oder Beton, eines Gebäudes aufgebracht ist. Das erfindungsgemäße Wärmedämmverbundsystem kann einerseits nachträglich an einem bereits erstellten Gebäude angebracht werden. Jedoch ist es ebenfalls denkbar, Gebäudefertigteile zur Neuerrichtung des Gebäudes bereits mit einem entsprechenden Wärmedämmverbundsystem bereitzustellen.

Ferner ist bevorzugt vorgesehen, dass die Deckschicht eine Putzschicht ist, bevorzugt eine zweilagige und/oder gewebeverstärkte Putzschicht.

Besonders bevorzugt wird vorgeschlagen, dass die Kapillarrohrmatte und/oder das Sammelrohr aus Kunststoff ist bzw. sind.

Es kann außerdem vorgesehen sein, dass die Kapillarrohrmatte auf der Wärmedämmschicht angeordnet ist.

Auch ist bevorzugt, dass der Wärmetauscher mit einem Wärmespeicher in Wirkverbindung steht. Eine Wärmepumpe kann optional nachgeschaltet werden.

Schließlich kann eine Ausführungsform der Erfindung zumindest einen Taupunktsensor auf weisen, der vorzugsweise innerhalb der Deckschicht angeordnet ist, und/oder zumindest einen Sensor zur Messung der Temperatur von in die Kapillarrohrmatte eintretender Wärmeträgerflüssigkeit.

Bevorzugt stehen der Taupunktsensor und/oder der Sensor zur Messung der Temperatur von in die Kapillarrohrmatte eintretender Wärmeträgerflüssigkeit mit einem Steuerungssystem in Wirkverbindung, das bevorzugt ein aus Hard- und Software bestehendes Mess- und Steuerungssystem umfasst.

Erfindungsgemäß ist ferner auch ein Gebäude mit einem erfindungsgemäßen Wärmedämmverbundsystem.

Erfindungsgemäß ist schließlich die Verwendung des Wärmedämmverbundsystems zur Vermeidung einer mikrobiellen Besiedelung in beziehungsweise auf der Deckschicht.

Die vorliegende Erfindung stellt überraschenderweise ein neuartiges, beheizbares Verbundsystemelement inklusive Energiegewinnung, -speicherung und -verteilung bereit. Dabei kann für die Temperierung ein Kapillarrohrmattensystem eingesetzt werden, das sowohl zur Wärmegewinnung als auch zur Wärmeabgabe genutzt werden kann. Mit dem erfindungsgemäßen Wärmedämmverbundsystem lässt sich eine bedarfgerechte Temperierung unter Verwendung von regenerativer Energie erreichen, was die Verweildauer von Feuchtefilmen auf der Oberfläche des Wärmedämmverbundsystems signifikant verkürzt. Ein solches Wärmedämmverbundsystem eignet sich nicht nur für die Vermeidung von Tauwasserbelastungen an Nord-und Westfassaden eines Gebäudes, sondern lässt sich auch auf Südfassaden übertragen, um dort beispielsweise auch für die Brauchwasservorerwärmung und Heizungsunterstützung des Gebäudes verwendet zu werden.

Überraschenderweise wurde ferner festgestellt, dass mit dem erfindungsgemäßen Wärmedämmverbundsystem auf einfache und kostengünstige Weise aktiv Energie gewonnen werden kann an Wärmedämmverbundsystem-Fassaden eines Gebäudes. Diese aktive Energiegewinnung kann über die Fassadenfläche ohne optische Beeinträchtigung erfolgen. Der Systemaufbau ist vergleichsweise kostengünstig. Ferner resultiert das erfindungsgemäße Wärmedämmverbundsystem in einer reduzierten Anschlussproblematik durch flächige Integration. Des weiteren wird durch die Bereitstellung der Kapillarrohrmatte in bzw. unterhalb der Deckschicht diese vor einer möglichen Zerstörung durch Hagel oder Vandalismus nahezu vollständig geschützt.

Mit dem erfindungsgemäßen Wärmedämmverbundsystem, das heißt durch Integration von vorgefertigten, Wärmeträgerflüssigkeit durchströmten Kapillarrohrmatten, vorzugsweise aus Kunststoff, in die Deckschicht (Putzschicht) eines Wärmedämmverbundsystems kann an der Fassadenoberfläche aktiv Wärmeenergie gewonnen werden, die beispielsweise für die solare Brauchwasservorerwärmung und Heizungsunterstützung des das Wärmedämmverbundsystem tragenden Gebäudes benutzt werden kann. Die über die Fassadenfläche gewonnene Wärme kann über den Wärmetauscher an einen Wärmespeicher abgegeben werden. Der Energieeintrag erfolgt durch Nutzung der Wärmesenke zwischen Oberflächentemperatur der Deckschicht und zirkulierender Wärmeträgerflüssigkeit.

Zur Durchströmung der Kapillarrohrmatte mit Wärmeträgerflüssigkeit ist eine in der Leistung an die Fläche angepasste Pumpe bevorzugt vorgesehen.

Ein in einer bevorzugten Ausführungsform vorgesehenes sensorgestütztes Steuerungssystem mit einem Taupunktsensor und/oder einem Sensor zum Messen der Temperatur der in die Kapillarrohrmatte eintretenden Wärmeträgerflüssigkeit verhindert, dass eine Wärmeentnahme aus der Fassade zu einer Betauung ihrer Oberfläche führt. In dieser besonderen Ausführungsform kann eine erhöhte Kondenswasserbelastung auf den dünnen Deckschichten verhindert werden, was die Ausbildung von Biofilme bildenden Pilzen, Algen und/oder Bakterien vermindert. Zur Vermeidung einer Betauung ist es wesentlich, die Temperatur der in die Kapillarrohrmatte eintretenden Wärmeträgerflüssigkeit oberhalb der Taupunkttemperatur zu halten. Dies kann beispielsweise auch dadurch erreicht werden, dass benötigte Wärme aus dem Wärmespeicher über die Wärmeträgerflüssigkeit zurück in die Kapillarrohrmatte geführt wird.

Der Taupunkt- und/oder Temperatursensor kann auf oder innerhalb der Deckschicht angeordnet sein. Das mit dem bzw. den Sensoren in Wirkverbindung stehende Steuerungssystem umfast ferner bevorzugt ein aus Hard- und Software bestehendes Mess- und Steuerungssystem, das die Messdaten vergleicht und entsprechende Relais ansteuert, wie beispielsweise Pumpenschaltung oder eventuell Variation des Volumenstroms. Darüberhinaus kann zusätzlich ein Teznperatur-heuchtefühler bei Verwendung eines Temperaturfühlers anstelle eines Taupunktsensors vorgesehen sein, zur Messung von Lufttemperatur und Luftfeuchte zur abschließenden Berechnung der Taupunkttemperatur.

Ein weiterer wesentlicher Vorteil des erfindungsgemäßen Wärmedämmverbundsystems liegt in der Minimierung der Oberflächentemperaturen des Systems und der Minimierung thermischer Spannungen.

Dünne Schichten auf Wärmedämmverbundsystem sind aufgrund fehlender Fugen einer hohen thermischen Belastung mit Aufheizung und Abkühlung ausgesetzt. Es werden, in Abhängigkeit der Farbgestaltung, sehr hohe Oberflächentemperaturen erreicht, die in der Vergangenheit vielfach zur Rissbildung in den Plattenfugen führten. Die hohe thermische Belastung der Oberflächen resultiert aus der Tatsache, dass im Gegensatz zu monolithischen Mauerwerk Dämmstoffe keine Wärmeenergie speichern können. Demzufolge kann die Wärmeenergie nicht in das Innere des Systems abgeführt werden, es entsteht vielmehr ein Wärmestau, der zu einer überproportional hohen Oberflächentemperatur führen kann. Mit dem erfindungsgemä-βen Wärmedämmverbundsystem kann nun die Wärme abgeführt werden und somit ein effektiver Überhitzungsschutz des Wärmedämmverbundsystems in den Sommermonaten erreicht werden. Zusätzlich kann der Wärmestau nutzbar gemacht werden, beispielsweise zur Brauchwassererwärmung.

Die Wärmespeicherung kann ansonsten in Abstimmung mit einem beliebigen Gebäudetechnikkonzept erfolgen, beispielsweise einer Nachheizung des Warmwasser-Bereitschaftsspeichers, des Heizungs-Pufferspeichers über einen Gas-Brennwertkessel oder als Reservoir für eine Wärmepumpe.

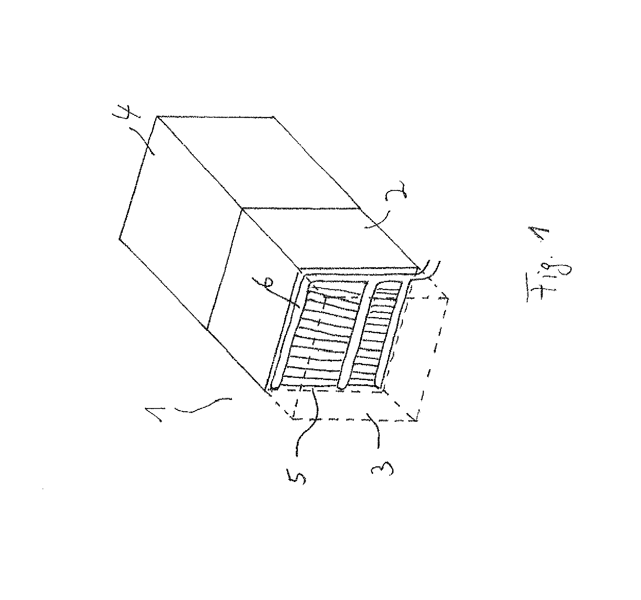

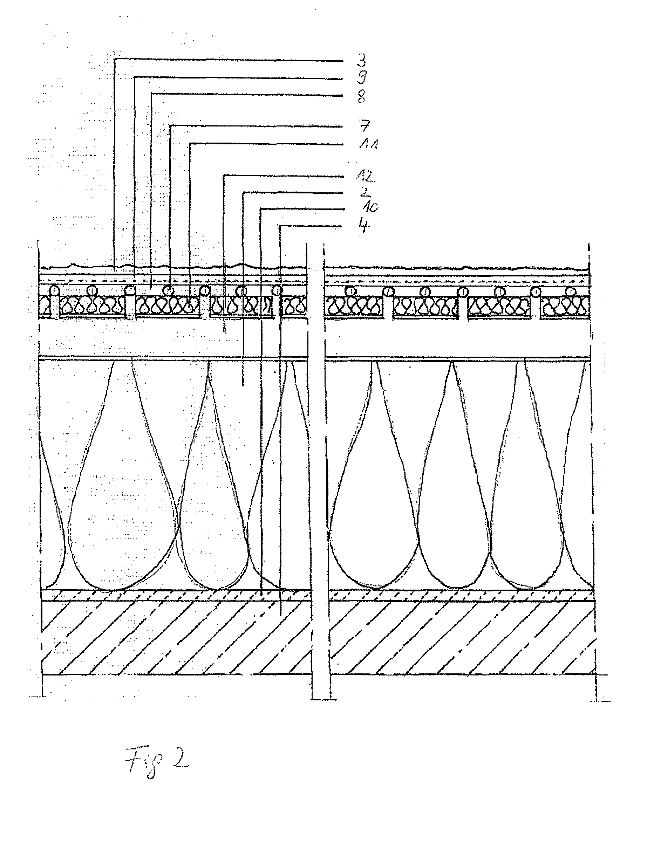

Weitere Vorteile und Merkmale des erfindungsgemäßen Wärmedämmverbundsystems ergeben sich aus der folgenden detaillierten Beschreibung einer bevorzugten Ausführungsform unter Bezugnahme auf die beigefügten Zeichnungen, in denen Fig. 1 eine (nicht maßstabsgerechte) perspektivische Ansicht eines erfindungsgemäßen Wärmedämmverbundsystems und Fig. 2 eine (nicht maßstabsgerechte) Querschnittsansicht (waagerecht) durch ein erfindungsgemäßes Wärmedämmverbundsystem zeigt.

Figur 1 zeigt eine perspektivische Ansicht eines erfindungsgemäßen Wärmedämmverbundsystems 1, das eine Wärmedämmschicht 2 und eine Deckschicht 3 umfasst. Die Wärmedämmschicht 2 kann mit der der Deckschicht 3 gegenüberliegenden Seite vorzugsweise vollflächig auf einem tragenden Wandbaustoff 4 aufgebracht sein, beispielsweise mittels Klebung und/oder mechanische Befestigungsmittel, wie Dübel oder Haltescbienen. Die Wärmedämmschicht ist vorzugsweise eine je nach Anforderung etwa 10 bis 20 cm dicke Wärmedämmschicht 2. Das Material der Wärmedämmschicht können EPS- oder Faserdämmplatten sein.

Auf der Außenseite der Wärmedämmschicht 2 ist eine Kapillarrohrmatte 5 angeordnet. Die einzelnen Kapillaren der Kapillarrohrmatte 5 sind vorzugsweise mit einem oder mehreren Sammelrohren 6 verbunden, die die Zirkulation von in den Kapillaren zirkulierende Wärmeträgerflüssigkeit (nicht gezeigt) von und zu dem Wärmetauscher (nicht gezeigt), vorzugsweise über Einsatz einer Pumpe, vereinfachen. Die Befestigung der Kapillarrohrmatten 5 auf der Wärmedämmschicht 2 kann vorzugsweise über Steckdübel erfolgen. Um einen geringen Schichtenaufbau zu gewährleisten, können die im Vergleich zu den Kapillaren dickeren Sammelrohre 6 in vor Ort oder werksmäßig vorgefertigten Vertiefungen der Wärmedämmschicht 2 verlegt werden.

Die Einbettung der Kapillarrohrmatten 5 in der Deckschicht 3 erfolgt bevorzugt mit einer auf die mechanischen sowie thermischen und hygroLhermischen Belastungen abgestimmten Mörtelrezeptur mit sehr guten Wärmeleiteigenschaften. Der weitere Aufbau des erfindungsgemä-βen Wärmedämmverbundsystems entspricht dem üblichen Aufbau bei der Erstellung von konventionellen Wärmedämmverbundsystemen.

Figur 2 zeigt eine Querschnittsansicht durch ein erfindungsgemäßes Wärmedämmverbundsystem im größeren Detail. Dabei ist eine Wärmedämmschicht 2 über eine Dämmplattenverklebung 10 an einem Wandbaustoff 4 aufgebracht. Auf der Außenseite der Wärmedämmschicht 2 ist eine Kapillarrohrmatte angeordnet, von der ein Stammrohr 12 und von diesem abgehende einzelne Kapillaren 7 gezeigt sind. Zwischen den einzelnen Kapillaren 7 ist ein Schaum 11, vorzugsweise ein Pistolenschaum, zur Verfüllung der Ausfräsungen der Stammrohre vorgesehen. Zwischen den einzelnen Kapillaren 7 ist ferner eine pastöse Ausgleichsmasse 8 zur Einbettung der Kapillarrohrmatte 5 aufgebracht. Daran schließt sich eine Armierungsschicht 9 und eine Deckschicht 3, beispielsweise ein Oberputz, an. Die Armierungsschicht 9 kann eine Dicke von etwa 5 mm aufweisen, während der Oberputz eine Dicke von vorzugsweise 3 mm aufweist.

Die Verteiler- und Sammelrohre weisen bevorzugt einen Durchmesser von etwa 20 mm auf, während die Verteilung in der Kapillarrohrmatte 6 in der Fläche über Kapillarrohre mit einem Durchmesser von etwa 4,3 mm in einem Abstand von 20 mm erfolgen kann.

Zur Herstellung eines erfindungsgemäßen Wärmedämmverbundsystems wird die Kapillarrohrmatte 5 auf der Wärmedämmschicht 2 fixiert, beispielsweise auch durch Ausschneiden von Aussparungen für die Integration der Versorgungsleitungen (Stammrohr). Nachdem eine Verbindung zwischen den Versorgungsleitungen und der Kapillarrohrmatte hergestellt worden ist, bevorzugt über Sammel- und Verteilerrohre, werden die Hohlräume in den ausgeschnittenen Bereichen verschäumt, und/oder es kann eine pastöse Spachtelmasse in die Mattenzwischenräume eingebracht werden. Ein solches Wärmedämmverbundsystem kann dann mit einem Wärmetauscher und/oder Wärmespeicher verbunden werden, vorzugsweise unter gleichzeitiger Installation einer geeigneten Mess- und Steuerungstechnik. Schließlich kann der Wärmespeicher und die Kapillarrohrmatte mit Wärmeträgerflüssigkeit befüllt werden.

In einer besonders bevorzugten Ausführungsform umfasst das erfindungsgemäße Wärmedämmverbundsystem zumindest zwei Sensoren, einen Taupunktsensor, der vorzugsweise innerhalb der Deckschicht angeordnet ist, sowie einen Sensor zur Messung der Temperatur der in die Kapillarrohrmatte 5 eintretenden Wärmeträgerflüssigkeit.

Das erfindungsgemäße Wärmedämmverbundsystem kann auf die folgende Art und Weise zur aktiven Energiegewinnung an Wärmedämmverbundsystem-Fassaden eines Gebäudes eingesetzt werden.

Durch die Bereitstellung von mit einer Wärmeträgerflüssigkeit, vorzugsweise Salzlösung (Sole), durchströmten Kapillarrohrmatte in bzw. unterhalb der Deckschicht 3 wird eine Energiesenke bereitgestellt. Auf die Fassade direkt auftretende Strahlung und/oder die in der Luft und Luftfeuchtigkeit enthaltene Wärme kann genutzt werden, um die Temperatur der sich in der Kapillarrohrmatte 5 befindlichen Trägerflüssigkeit zu erwärmen. Die erwärmte Trägerflüssigkeit wird, bevorzugt unter Einsatz einer Pumpe, zu einem Wärmetauscher zirkuliert, an dem die in der Wärmeträgerflüssigkeit enthaltene Wärme ausgetauscht und an einen Wärmespeicher weitergeleitet werden kann. Von diesem Wärmespeicher kann die Wärme dann für die unterschiedlichsten Zwecke innerhalb eines Gebäudes eingesetzt werden. Der erfindunsgemä-βe Wärmedämmsystemaufbau kann auch als ein in ein Wärmedämmverbundsystem integrierter Flächenabsorber bezeichnet werden.

Weist das erfindungsgemäße Wärmedämmverbundsystem ferner das oben beschriebene sensorgestützte Steuerungssystem zum Abgleich der Taupunkt- und Vorlauftemperatur auf, kann auf einfache Weise die Kondenswasserbelastung des Wärmedämmverbundsystems reduziert werden, indem insbesondere die Temperatur der Deckschicht durch geeignete Einstellung der Temperatur der Wärmeträgerflüssigkeit auf eine Temperatur oberhalb der Taupunkttemperatur gehalten werden kann. Dies wirkt der Ausbildung von Biofilmen aus Pilzen, Algen und Bakterien entgegen.

Laborversuche mit dem erfindungsgemäßen Wärmedämmverbundsystem haben gezeigt, dass der Systemaufbau eine auf die anliegende Temperaturdifferenz bezogene spezifische Flächenleistung von etwa 12 W/m² K aufweisen kann.

Die in den Ansprüchen, in der Beschreibung und der Zeichnung offenbarten Merkmale können sowohl einzeln als auch in jeder beliebigen Kombination für die Verwirklichung der Erfindung in ihren verschiedenen Ausführungsformen wesentlich sein.

## Patentansprüche

1. Wärmedämmverbundsystem mit einer Wärmedämmschicht, auf der eine Deckschicht aufgebracht ist, wobei in und/oder unterhalb der Deckschicht eine Wärmeträgerflüssigkeit enthaltende Kapillarrohrmatte vorgesehen ist, die Kapillarrohrmatte zumindest ein Verteiler- und ein Sammelrohr aufweist, die die einzelnen Kapillaren mit einem Wärmetauscher verbinden, und wobei die Wärmeträgerflüssigkeit innerhalb der Kapillarrohrmatte zirkulierbar ist und mit dem Wärmetauscher in Wirkverbindung steht.

2. Wärmedämmverbundsystem nach Anspruch 1, **dadurch gekennzeichnet, dass** die Kapillarrohrmatte unmittelbar unterhalb der Deckschichtoberfläche angeordnet ist.

3. Wärmedämmverbundsystem nach Anspruch 1 oder 2, **dadurch gekennzeichnet, dass** das Wärmedämmverbundsystem über die Wärmedämmschicht zumindest teilweise auf einer Außenseite eines Wandbaustoffs, bevorzugt Mauerwerk oder Beton, eines Gebäudes aufgebracht ist.

4. Wärmedämmverbundsystem nach einem der vorangehenden Ansprüche, **dadurch gekennzeichnet, dass** die Deckschicht eine Putzschicht ist, bevorzugt eine zweilagige und/oder gewebeverstärkte Putzschicht.

5. Wärmedämmverbundsystem nach einem der vorangehenden Ansprüche, **dadurch gekennzeichnet, dass** die Kapillarrohrmatte und/oder das Sammelrohr aus Kunststoff ist bzw. sind.

6. Wärmedämmverbundsystem nach einem der vorangehenden Ansprüche, **dadurch gekennzeichnet, dass** die Kapillarrohrmatte auf der Wärmedämmschicht angeordnet ist.

7. Wärinedämmverbundsystem nach einem der vorangehenden Ansprüche, **dadurch gekennzeichnet, dass** der Wärmetauscher mit einem Wärmespeicher in Wirkverbindung steht.

8. Wärmedämmverbundsystem nach einem der vorangehenden Ansprüche, **gekennzeichnet durch** zumindest einen Taupunktsensor, der vorzugsweise innerhalb der Deckschicht angeordnet ist, und/oder zumindest einen Sensor zur Messung der Teineperatur von in die Kapillarrohrmatte eintretender Wärmeträgerflüssigkeit.

9. Gebäude mit einem Wärmedämmverbundsystem nach einem der vorangehenden Ansprüche.

10. Verwendung des Wärmedämmverbundsystems nach einen der Ansprüche 1 bis 8 zur Vermeidung einer mikrobiellen Besiedelung in beziehungsweise auf der Deckschicht.
